# EUROPÄISCHE PATENTANMELDUNG

(11) **EP 3 885 191 A1**
(43) Veröffentlichungstag der Anmeldung: **29.09.2021**
(21) Anmeldenummer: 21401016.7
(22) Anmeldetag: 27.03.2021
(51) Int. Cl.: B60P 1/48, B60P 1/64, B60P 3/34, B65D 88/12

(54) **ABROLLRAHMENVORRICHTUNG ZUR AUFNAHME, ABSTÜTZUNG UND POSITIONIERUNG EINER MOBILEN (WOHN-)EINHEIT, (WOHN-)EINHEIT MIT EINER SOLCHEN ABROLLRAHMENVORRICHTUNG, SOWIE VERFAHREN UND VERWENDUNG**

(30) Priorität: 28.03.2020 DE 202020101679 U; 03.04.2020 DE 102020109372
(71) Anmelder: Amat Kreft, Ernst-Peter, 44894 Bochum (DE)
(72) Erfinder: Amat Kreft, Ernst-Peter, 44894 Bochum (DE)
(74) Vertreter: Tanner, Lukas

(57) **Zusammenfassung**

Die vorliegende Erfindung betrifft eine Abrollrahmenvorrichtung (10) zur Aufnahme, Abstützung und Positionierung einer mobilen (Wohn-)Einheit, wobei die Abrollrahmenvorrichtung (10) aufweist: eine erste Kupplung (11) mit wenigstens einem Angriffspunkt für eine Positionierungs-Kinematik (21) eines Transportfahrzeugs (20); und eine zweite Kupplung (13) oder Verbindungsschnittstelle, die eingerichtet und angeordnet ist zum Verbinden und Halten der mobilen Wohneinheit (1); und wenigstens einen durch die Abrollrahmenvorrichtung (10) definierten Abrollpunkt (Pb) eingerichtet zum Abstützen und Abrollen der Einheit auf dem Untergrund; und eine struktursteife Tragstruktur (16); wobei die Abrollrahmenvorrichtung (10) eingerichtet ist für eine struktursteife Abstützung der positionierten mobilen Wohneinheit (1) zwischen dem wenigstens einen Angriffspunkt an der ersten Kupplung und dem wenigstens einen Abrollpunkt (Pb) wahlweise in Zwei-Punkt-Lagerung oder DreiPunkt-Lagerung mit Zwischen-Abstützung an einer hinteren Kante (20b) des Transportfahrzeugs (20). Ferner betrifft die Erfindung auch eine (Wohn-)Einheit (1) mit einer solchen Abrollrahmenvorrichtung (10) sowie ein Verfahren und Verwendungen.

## Beschreibung

### TECHNISCHES GEBIET

Die vorliegende Erfindung betrifft eine Abrollrahmenvorrichtung zur Aufnahme, Abstützung und Positionierung einer mobilen (Wohn-)Einheit sowie eine (Wohn-)Einheit mit einer solchen Abrollrahmenvorrichtung. Ferner betrifft die vorliegende Erfindung auch ein Verfahren zum Aufnehmen, Abstützen und Positionieren einer autonom mobilen oder verlagerbaren Wohneinheit oder einer mobilen Ausstellungs- oder Verkaufseinheit mittels einer solchen Abrollrahmenvorrichtung, insbesondere unter Verwendung einer Hebe-Schwenk-Kinematik eines Transportfahrzeugs. Nicht zuletzt betrifft die vorliegende Erfindung auch die Verwendung der Abrollrahmenvorrichtung, insbesondere in vorteilhafter räumlicher (insbesondere dauerhafter) Anordnung an der (Wohn-)Einheit.

### HINTERGRUND DER ERFINDUNG

Mobile Wohneinheiten, Minihäuser, Aufenthaltsräume oder sonstige Ausstellungs-/Verkaufseinheiten werden in vielen Anwendungsfällen in derselben Ausstattung oder Ausgestaltung von denselben Personen in kurzer zeitlicher Abfolge an unterschiedlichen Orten benötigt. Man denke beispielsweise an Ausstellungsmessen oder viele verschiedene Ferienorte, oder man denke an die Art und Weise des Handelns und Vermarktens, welche mit den seit einiger Zeit wieder häufiger verwendeten Food-Trucks Verbreitung fand. In diesem Zusammenhang ist es für die Nutzbarkeit und Praktikabilität entscheidend, dass die Mobilität gut ist, und dass beim Verlagern und Neu-Positionieren der Einheit möglichst wenig zeitlicher und materieller Aufwand erforderlich ist. Zwar ist es reizvoll, wenn die Mobilität maximal groß ist, was bei den Food-Trucks oder sonstigen Gespannen, bei welchen die Antriebsmaschine ständig mitgeführt wird, sichergestellt werden kann. Dies bindet jedoch auch einen recht hohen materiellen Wert an diese eine einzelne Einheit, und es müssen auch Nachteile wie z.B. hohe Einstiegshöhe und nur mäßig gute Zugänglichkeit von der Straße in Kauf genommen werden. In der Tat kann es für das ein oder andere (Verkaufs-)Gespräch recht nachteilig sein, wenn der Kunde deutlich weiter unten steht als der Verkäufer, oder wenn der Kunde sich über mehrere kleine Stufen erst in den von der Einheit umgrenzten Raum hochkämpfen muss.

Die DE 3927646 A1 beschreibt eine Vorrichtung zum Aufnehmen und Absetzen von Lasten. US 2019 /0 144 201 A1 beschreibt einen Abrollrahmen, auf welchem Container gelagert werden können. DE 81 29 692 U1 beschreibt ein Lastfahrzeug mit Transportbehälter. DE 15 31 805 A beschreibt ein Verfahren und eine Vorrichtung zum Aufladen eines Containers auf einen LKW.

### ZUSAMMENFASSUNG DER ERFINDUNG

Aufgabe ist, eine Vorrichtung bzw. ein Gesamtsystem bereitzustellen, womit die Mobilität von Wohneinheiten, Ausstellungs- oder Verkaufseinheiten verbessert werden kann, insbesondere bei möglichst minimalem materiellen Einsatz, insbesondere auch in Hinblick auf ein zeiteffizientes Verlagerungskonzept. Auch besteht die Aufgabe darin, die Vorrichtung bzw. das Gesamtkonzept derart auszugestalten, dass durch Verwendung der Vorrichtung auch räumliche und strukturelle Vorteile erzielt werden können. Nicht zuletzt ist es Aufgabe, die Vorrichtung so auszuführen, dass der Anwendungsbereich für die jeweilige Einheit maximiert werden kann, selbst für den Fall dass ein eigenes Transportfahrzeug zur Verlagerung der Einheit nicht oder allenfalls nur zeitweise verfügbar ist.

Diese Aufgabe wird durch eine Abrollrahmenvorrichtung gemäß Anspruch 1 und eine (Wohn-)Einheit mit einer solchen Abrollrahmenvorrichtung sowie durch ein Verfahren gemäß dem nebengeordneten Verfahrensanspruch und durch eine Verwendung gemäß dem jeweiligen nebengeordneten Verwendungsanspruch gelöst. Vorteilhafte Weiterbildungen der Erfindung werden in den jeweiligen Unteransprüchen erläutert. Die Merkmale der im Folgenden beschriebenen Ausführungsbeispiele sind miteinander kombinierbar, sofern dies nicht explizit verneint ist.

Bereitgestellt wird eine Abrollrahmenvorrichtung eingerichtet zur Aufnahme, Abstützung und Positionierung einer mobilen Wohneinheit oder einer mobilen Ausstellungs- oder Verkaufseinheit, insbesondere einer autonom mobilen oder verlagerbaren Wohneinheit mit Rahmenkonstruktion, wobei die Abrollrahmenvorrichtung aufweist: eine erste Kupplung mit wenigstens einem Angriffspunkt für eine Positionierungs-Kinematik eines Transportfahrzeugs, insbesondere für eine Hebe-Schwenk-Kinematik eines LKWs oder eines Tiefladers; und eine zweite Kupplung oder Verbindungsschnittstelle, die eingerichtet und angeordnet ist zum Kuppeln/Verbinden und Halten der mobilen Wohneinheit, insbesondere an deren Unterseite, insbesondere an deren Rahmenkonstruktion, mit der zweiten Kupplung/Verbindungsschnittstelle insbesondere in Ausgestaltung als Tragstruktur für genormte Transportmittel (z.B. für standardisierte LKW-Ladeflächen); und wenigstens einen durch die Abrollrahmenvorrichtung definierten Abrollpunkt eingerichtet zum Abstützen und Abrollen der Einheit auf dem Boden/Untergrund; und eine struktursteife Tragstruktur, mittels welcher Struktursteifigkeit für die unbeladene oder beladene Abrollrahmenvorrichtung zumindest zwischen der ersten und zweiten Kupplung und dem wenigstens einen Abrollpunkt sowohl bei statischer Anordnung als auch beim Positionieren sichergestellt ist.

Erfindungsgemäß wird vorgeschlagen, dass die Abrollrahmenvorrichtung eingerichtet ist für eine struktursteife Abstützung der positionierten (bzw. zu positionierenden) mobilen Wohneinheit zwischen dem wenigstens einen Angriffspunkt an der ersten Kupplung und dem wenigstens einen Abrollpunkt wahlweise in Zwei-Punkt-Lagerung oder Drei-Punkt-Lagerung mit Zwischen-Abstützung an einer hinteren Kante des Transportfahrzeugs, insbesondere über eine freie Länge von mindestens 5m, insbesondere mit der Abrollrahmenvorrichtung in vordefinierter fixer Relativposition relativ zur Wohneinheit. Dies liefert Vorteile hinsichtlich guter Mobilität, hoher Funktionalität, breitem Anwendungsspektrum und auch hinsichtlich funktionaler und räumlicher Integration.

Als Verlagern ist dabei ein Transportieren zwecks Orts- oder Stellplatzwechsel zu verstehen. Das Verlagern kann beispielsweise mittels Transportfahrzeugen oder auch zumindest für kurze Strecken auf autonome Weise mittels eines Antriebs der mobilen Wohneinheit erfolgen.

Als Positionieren ist dabei ein Ausrichten oder exaktes Abstellen in einer gewünschten Position zu verstehen.

Als freie Länge ist dabei der zu überbrückende bzw. abstützende Längenabschnitt der (Wohn-)Einheit zu verstehen. Je größer die freie Länge, desto steifer/stabiler muss die Konstruktion ausgestaltet sein. Je nach Kinematik und Höhe und Schwenkwinkel kann die freie Länge (deutlich) kleiner sein als die absolute Länge der (Wohn-)Einheit. Die freie Länge kann jedoch auch zumindest annähernd der absoluten Länge entsprechen, insbesondere für den Fall dass die Einheit bei Abstützung an einer heckseitigen Kante frei im Raum im Wesentlichen ausschließlich über den Kraftangriffspunkt gehalten wird.

Ein Eigentümer oder Besitzer oder Nutzer der (Wohn-)Einheit ist dank der Abrollrahmenvorrichtung wesentlich flexibler, insbesondere ortsungebundener. Für den Transport der (Wohn-)Einheit kann an vielen Orten auf der ganzen Erde z.B. ein standardisierter Transport-/Logistikdienstleister mit dem Verlagern der Einheit beauftragt werden, insbesondere auf sehr nutzerfreundliche Weise auf Basis von dafür vorgesehenen Smartphone-/Online-Applikationen. Dank dieser örtlichen und zeitlichen Unabhängigkeit eignet sich eine/die mit der Abrollrahmenvorrichtung ausgestattete Einheit insbesondere auch für Behausungen für Fahrgeschäfte (Zirkus, Jahrmarkt, Wochenmarkt, Volksfest).

An der Abrollrahmenvorrichtung sind optional höhenverstellbare Füße oder Stützen vorgesehen, insbesondere im Bodenbereich, insbesondere um Unebenheiten/Schrägen zu kompensieren.

Gemäß einer Variante ist die Rahmenkonstruktion zumindest teilweise, insbesondere vollständig aus Holz ausgeführt. Dann ist die Abrollrahmenvorrichtung bevorzugt reversibel an die Rahmenkonstruktion gekuppelt, also form- und/oder kraftschlüssig, insbesondere mittels Schrauben und/oder Dübeln. Es hat sich gezeigt, dass insbesondere bei Holzkonstruktionen eine funktionale Integration mittels der Abrollrahmenvorrichtung in die Einheit erfolgen kann, nämlich einerseits hinsichtlich Mobilität, andererseits hinsichtlich Struktursteifigkeit. Anders ausgedrückt: Speziell auch bei Holzkonstruktionen kann mittels der Abrollrahmenvorrichtung ein guter zusätzlicher Stabilitätsvorteil erzielt werden, so dass die eigentliche Holzkonstruktion vergleichsweise schlank ausgeführt sein kann, und es lässt sich z.B. auch eine vergleichsweise niedrige Einstiegshöhe realisieren (Stichwort: Barrierefreiheit).

Wahlweise können zusätzlich zu oder anstelle von Holz-Materialien auch Kunststoffe, Metalle oder andere Materialien die Einheit bzw. die Rahmenkonstruktion bilden, insbesondere Materialien, welche bereits bei Camping-Fahrzeugen oder Camping-Einheiten zur Anwendung kommen.

Die Abrollrahmenvorrichtung ist insbesondere eingerichtet für eine Verlagerung und Abstützung von Wohneinheiten gemäß der in der Patentanmeldung DE 10 2018 127 871 beschriebenen Ausgestaltung.

Im Stand der Technik gibt es bereits Ansätze, die Mobilität von z.B. Bauwagen bzw. Baucontainer zu verbessern; beispielsweis gibt es Konzepte, bei welchen die Bauwagen als Anhänger ausgestaltet sind. Die vorliegende Erfindung betrifft vornehmlich Wohneinheiten für zeitweises oder dauerhaftes Wohnen, Show-Rooms, Dienstleistungs-Gebäudeeinheiten.

Dabei muss der wenigstens eine durch die Abrollrahmenvorrichtung definierte Abrollpunkt nicht notwendigerweise ein Lagerpunkt der Abrollrahmenvorrichtung sein; wahlweise kann ein Lager, über welches die Einheit abgerollt wird, zusätzlich oder alternativ auch an der Einheit selbst vorgesehen sein. Der durch dieses Lager geschaffene Abrollpunkt wird gleichwohl durch die Abrollrahmenvorrichtung definiert, denn die Abrollrahmenvorrichtung gibt die relative Position der Einheit auf der Abrollrahmenvorrichtung vor.

Im Folgenden werden die Begriffe Einheit, (Wohn-)Einheit und Wohneinheit synonym verwendet. Mit jedem dieser Begriffe kann implizit auf die unterschiedlichen Ausgestaltungen und Verwendungsmöglichkeiten der (Wohn-)Einheit Bezug genommen werden, sofern keine explizite Beschränkung auf eine bestimmte Ausgestaltung/Verwendung erfolgt.

Gemäß einem Ausführungsbeispiel ist die Abrollrahmenvorrichtung eingerichtet für eine Abstützung und Positionierung der mobilen Wohneinheit beim Verlagern der mobilen Wohneinheit innerhalb einer Länge im Bereich von bis zu 17m und einer lichten Höhe im Bereich von 7,5m, insbesondere bei einer mobilen Wohneinheit mit einer Länge von 5m und einer Höhe von 2,5m. Es ist ersichtlich, dass beim Positionieren der Wohneinheit Platz erforderlich ist. Jedoch ist vergleichsweise wenig Platz erforderlich. Die erforderliche Höhe hängt insbesondere von der Ausgestaltung der Hebe-Schwenk-Kinematik und dem Schwenkwinkel ab, und kann optional auch deutlich kleiner als 7,5m sein, beispielsweise nur 5-6m Länge. Jedenfalls wird keine besonders große lichte Höhe für einen Kran oder dergleichen benötigt. Die (Wohn-)Einheit kann also auch unter Bäumen oder dergleichen (z.B. Vordächer) positioniert werden, und wahlweise auch auf den Rollen weiter verlagert werden, zumindest zum Rangieren. In der Länge muss zwar mit einem Platzbedarf von der Länge des Transportfahrzeugs zuzüglich der Länge der (Wohn-)Einheit und ca. 1-2m Rangier-Länge gerechnet werden. Jedoch kann dieser Platzbedarf ebenfalls als vergleichsweise gering betrachtet werden, und zudem lässt sich der erforderliche Platzbedarf vergleichsweise exakt vordefinieren und beim Positionieren auch einhalten.

Es hat sich gezeigt, dass eine auf ca. 5m limitierte Länge der Wohneinheit bzw. der Abrollrahmenvorrichtung auch den Anwendungsbereich erweitert, insbesondere auch in Hinblick auf die Nutzung von PKW-Stellflächen. Beispiel: Eine Familie wohnt vergleichsweise eng über drei Etagen in einem Reihenendhaus und hat wenig Platz, das älteste Familienmitglied zu pflegen. Jedoch hat die Familie zwei PKW-Stellplätze. Einer der PKW-Stellplätze kann nun zur zumindest zeitweisen Anordnung der Wohneinheit genutzt werden, so dass das älteste Familienmitglied barrierefrei in der Wohneinheit wohnen und von den Familienmitgliedern betreut werden kann. Dank der Abrollrahmenvorrichtung kann die Wohneinheit problemlos und zeit-/kosteneffizient umpositioniert oder verlagert bzw. entfernt werden, wenn wieder eine andere Nutzung gewünscht wird.

Gemäß einem Ausführungsbeispiel weist die struktursteife Tragstruktur in dem unter der (Wohn-)Einheit angeordneten/anzuordnenden Bereich Längs- und Querträger auf, die zumindest annähernd in derselben Ebene angeordnet sind (also nicht übereinander). Hierdurch kann eine minimierte Bau-Höhe realisiert werden. Falls einer der Träger eine größere Querschnittshöhe aufweist als die anderen Träger, können die Träger mit der kleineren Querschnittshöhe räumlich in die konstruktive Höhe des Trägers mit der größere/größten Querschnittshöhe integriert sein, insbesondere in einer Anordnung mit den Oberseiten aller Träger in derselben Höhenebene. Dies begünstigt die Befestigung an der Bodengruppe der (Wohn-)Einheit. Bei sich kreuzenden Trägern können einzelne der Träger durch die Träger mit dem jeweils relativ größeren Querschnittsprofil hindurchgeführt werden, und/oder die Träger sind/werden an Kreuzungspunkten auf Stoß stoffschlüssig miteinander verbunden, insbesondere zwecks möglichst flacher Bauweise. Sich kreuzende Träger der struktursteifen Tragstruktur sind vorzugsweise zumindest an der Oberseite in derselben Höhenebene angeordnet (also nicht übereinander).

Beispielsweise weist die mobile (Wohn-)Einheit eine Höhe von bis zu 3,0m auf. Hierdurch kann der auch beim Transport über die Straße verfügbare Platz in Höhenrichtung gut ausgenutzt werden, und das Raumangebot kann maximiert werden. Beispielsweise weist die mobile Einheit zumindest annähernd die Außenabmessungen eines so genannten 20-Fuss-High-Cube-Containers auf.

Gemäß einem Ausführungsbeispiel ist der Kraftangriffspunkt stirnseitig der mobilen Wohneinheit vorgesehen, insbesondere zumindest annähernd mittig in Querrichtung, insbesondere auf einer Höhe von z.B. 1,5m. Dies begünstigt nicht zuletzt das Kuppeln mit dem Transportfahrzeug.

Die Abrollrahmenvorrichtung weist zur stirnseitigen Anordnung der ersten Kupplung bzw. des (Kraft-)Angriffspunktes wenigstens einen Vertikalträger und/oder wenigstens eine Vertikalstrebe auf. Damit kann eine Kraft von einer Hebe-Schwenk-Kinematik auf die Wohneinheit weitergeleitet werden. Insbesondere wird der Angriffspunkt mittels des/der Träger in zumindest annähernd zentrischer Position angeordnet, insbesondere zentrisch sowohl in vertikaler als auch in horizontaler Richtung (quer).

Gemäß einem Ausführungsbeispiel weist die zweite Kupplung/Verbindungsschnittstelle der Abrollrahmenvorrichtung wenigstens eine Führungsschiene und/oder ein Gleitlager oder einen Gleitlagerbestandteil auf, welche/s/r derart angeordnet und in Längsrichtung ausgerichtet ist, dass die Abrollrahmenvorrichtung eingerichtet ist zur optionalen translatorischen Führung der Einheit relativ zum Transportfahrzeug, insbesondere bei reiner Translation ohne Schwenkbewegung. Dies begünstigt nicht zuletzt auch einen vorteilhaften Bewegungspfad.

Gemäß einem Ausführungsbeispiel ist der Abrollpunkt im Bereich einer heckseitigen Kante der mobilen Wohneinheit angeordnet/anordenbar, insbesondere mit einer Längs-Varianz (Abweichung von der exakten Längsposition der Kante) von maximal plus/minus 10-20cm zur heckseitigen Kante. Der (jeweilige) Abrollpunkt kann dabei durch ein Kugel- oder Rollenlager der Abrollrahmenvorrichtung definiert sein. Diese Anordnung hat sich für viele Anwendungsfälle als vorteilhaft erwiesen.

Gemäß einem vorteilhaften Ausführungsbeispiel ist die Abrollrahmenvorrichtung eingerichtet für eine Abstützung und Positionierung der mobilen Wohneinheit bei einer Breite von bis zu 2,5m, bis zu 3,0m oder über 3,0m, insbesondere bis zu 3,6m, insbesondere mit einer Breite der Abrollrahmenvorrichtung von bis zu 2,4m. Diese Abmessungen ermöglichen jeweils auch eine Berücksichtigung von Anforderungen oder Geboten im Straßenverkehr.

Gemäß einem vorteilhaften Ausführungsbeispiel weist die Abrollrahmenvorrichtung in der Seitenansicht eine L-förmige Geometrie auf, insbesondere mit einem/dem Vertikalträger (bzw. einer Vertikalstrebe) zur Definition des aufwärts gerichteten Abschnitts und mit einem/dem Längs- und/oder Querträger zur Definition des horizontal ausgerichteten Abschnitts. Eine solche Geometrie lässt sich auch auf zweckdienliche Weise räumlich in die Wohneinheit bzw. dessen Struktur (insbesondere Unterboden) integrieren.

Gemäß einem vorteilhaften Ausführungsbeispiel ist die Abrollrahmenvorrichtung auf Rollen gelagert, welche einen Radius von kleiner 100mm, insbesondere kleiner gleich 60mm aufweisen. Hierdurch kann eine Einstiegshöhe bzw. konstruktive Höhe weiter minimiert werden.

Die Abrollrahmenvorrichtung weist z.B. Rollen auf, welche ausschließlich an einer hinteren stirnseitigen Kante der Abrollrahmenvorrichtung angeordnet sind, insbesondere in vordefinierter Längsposition, insbesondere mit vordefinierter Ausrichtung der Roll-Achse.

Gemäß einem vorteilhaften Ausführungsbeispiel ist das Querschnittsprofil einzelner Träger der Abrollrahmenvorrichtung zumindest abschnittweise ein I-, L-, U- oder T-Profil. Hierdurch kann für die jeweilige Belastung auch eine besonders hohe Steifigkeit sichergestellt werden, insbesondere bei möglichst minimal großer Querschnittshöhe.

Gemäß einem vorteilhaften Ausführungsbeispiel besteht die Abrollrahmenvorrichtung aus einem stoffschlüssig verbindbaren Material oder weist dieses zumindest auf, insbesondere schweißbares Metall, bevorzugt Stahl.

Gemäß einem vorteilhaften Ausführungsbeispiel ist die Abrollrahmenvorrichtung im Querschnitt flacher als 20cm, insbesondere flacher als 18cm, insbesondere zumindest in einem unterhalb der Wohneinheit anzuordnenden Horizontalabschnitt der Abrollrahmenvorrichtung. Hierdurch kann auch vermieden werden, dass die (Wohn-)Einheit mit darunter montierter Abrollrahmenvorrichtung eine größere Einstiegshöhe erhalten muss. Es hat sich gezeigt, dass mittels des erfindungsgemäßen Konzeptes eine Optimierung/Minimierung der Einstiegshöhe auf 17cm oder noch kleiner realisiert werden kann, insbesondere bei Minimierung des Rollendurchmessers und bei funktionaler/struktureller Integration der Träger der Abrollrahmenvorrichtung in die Rahmenkonstruktion oder eine sonstige Tragkonstruktion oder Bodengruppe der (Wohn-)Einheit.

Gemäß einem vorteilhaften Ausführungsbeispiel weist die Abrollrahmenvorrichtung mit integrierten/montierten Rollen eine Höhe kleiner gleich 18cm auf. Dies ermöglicht eine Einstiegshöhe in die (Wohn-)Einheit bzw. auf deren Bodenebene auf einer Höhe von (max.) 20cm. Insbesondere bei einer kombinierten Verwendung von Metall- und Holzmaterialien, insbesondere Stahl/Holz-Sandwich, kann eine vergleichsweise niedrige Einstiegshöhe sichergestellt werden.

Die Abrollrahmenvorrichtung ist erfindungsgemäß in Ausgestaltung als Abrollrahmenvorrichtung zur räumlichen Integration unter eine Bodenebene einer/der mobilen (Wohn-)Einheit bereitgestellt, insbesondere indem die Abrollrahmenvorrichtung in der konstruktiven Breite und wahlweise auch in der Anordnung der Querträger an die konstruktive Breite der mobilen (Wohn-)Einheit und wahlweise auch an die relative Anordnung von Querträgern einer Bodengruppe der (Wohn-)Einheit adaptiert ist. Wahlweise kann die Abrollrahmenvorrichtung derart geometrisch/konstruktiv ausgestaltet sein, dass bestimmungsgemäß eine räumliche Integration in einen Hohlraum unter Querträgern und zwischen Längsträgern einer Rahmenkonstruktion der mobilen (Wohn-)Einheit erfolgen kann/soll.

Die zuvor genannte Aufgabe wird auch gelöst durch eine mobile Wohneinheit oder mobile Ausstellungs- oder Verkaufseinheit mit einer zuvor beschriebenen Abrollrahmenvorrichtung, wobei die Abrollrahmenvorrichtung an eine Boden-Struktur der mobilen Wohneinheit, Ausstellungs- oder Verkaufseinheit gekuppelt ist, insbesondere ausschließlich über die zweite Kupplung, insbesondere zum Bilden einer integralen Transporteinheit aus Wohneinheit und Abrollrahmenvorrichtung. Dies liefert zuvor genannte Vorteile.

Beim Verlagern und Positionieren soll die Inneneinrichtung der Wohneinheit möglichst fest (mechanisch) verankert sein. Dazu können Verschraubungen dienen, und die jeweiligen Türen und Fenster können verriegelt sein. Küchen- und Bad-Module können fest an/in der Wohneinheit verankert sein und daher in der Wohneinheit verbleiben, auch beim Verschwenken mittels einer Hebe-Schwenk-Kinematik. Somit ermöglicht die Erfindung, die Wohneinheit in kurzer Zeit bereitzustellen; für den Bereich der Pflege z.B. kann dadurch auch ein Konzept realisiert werden, welches unter dem Schlagwort "sofort barrierefrei" beschrieben werden kann: Im Bedarfsfall wird eine mobile Wohneinheit neben dem Haus der Familie platziert, und das pflegebedürftige Familienmitglied kann die barrierefreie Wohneinheit beziehen, ohne von der Familie getrennt werden zu müssen.

Wahlweise kann die Hebe-Schwenk-Kinematik auch wenigstens eine translatorische Verlagerungsachse aufweisen, insbesondere in Längsrichtung des Fahrzeugs. Die Kombination mit einer translatorischen Verlagerung des Kraftangriffspunktes des Hebels am Fahrzeug ermöglicht einen vergleichsweise kurzen Hebelarm und einen vorteilhaften Bewegungspfad für die Einheit, und kann auch Kräfte minimieren und/oder den Schwenkwinkel moderat niedrig halten.

Gemäß einem vorteilhaften Ausführungsbeispiel ist die Einstiegshöhe zu einer Bodenebene der Einheit kleiner gleich 20cm ist, insbesondere kleiner gleich 18cm. Die Einheit kann eine Bodenkonstruktionshöhe aufweisen (gemessen von einer Unterseite der Einheit bis zu einer betretbaren Bodenebene), die auch bei unter der Einheit angeordneter Abrollrahmenvorrichtung kleiner gleich 20cm ist. Hierdurch kann z.B. auch das Ziel, barrierefreien Zugang zu ermöglichen, leichter erreicht werden.

Erfindungsgemäß ist die Abrollrahmenvorrichtung bei der Verwendung räumlich in eine Bodengruppe der Einheit integriert, insbesondere zwischen zwei Längsträgern der Einheit/Bodengruppe, wobei die Abrollrahmenvorrichtung in dem unter der Einheit angeordneten Abschnitt bevorzugt eine konstruktive Höhe kleiner gleich 15cm, insbesondere kleiner gleich 10cm, wahlweise kleiner gleich 7cm aufweist, und wobei bevorzugt eine/die betretbare Bodenebene der Einheit sowohl mit als auch ohne darunter angeordneter Abrollrahmenvorrichtung in einer Höhe kleiner gleich 20cm zum Untergrund angeordnet/anordenbar ist. Hierdurch kann eine räumliche Integration der Abrollrahmenvorrichtung erfolgen, insbesondere auch als Nachrüst-Komponente. Dabei kann für den jeweiligen Anwendungsfall frei entschieden werden, ob die Abrollrahmenvorrichtung dauerhaft unter der Einheit angeordnet bleiben soll. Wahlweise kann die Abrollrahmenvorrichtung lediglich für den Transport unter die Einheit integriert werden, insbesondere indem die Einheit einseitig angehoben wird und die Abrollrahmenvorrichtung unter die Einheit geschoben wird und form- und/oder kraftschlüssig befestigt wird, insbesondere zumindest teilweise auch mittels Rastmechanismen.

Dank niedriger Einstiegshöhe kann die erfindungsgemäße Wohneinheit auch auf einfache Weise an ein bestehendes Haus gekuppelt werden oder z.B. eine Garage erweitern, oder in Kombination mit einer sonstigen Stellfläche oder einem Carport verwendet werden. Die zu überbrückende Höhendifferenz ist jedenfalls gering. Selbst für den Fall dass der bereits bestehende Wohnraum ebenerdig ist, kann die Wohneinheit über eine kleine Stufe von maximal 20cm auf sichere Weise zugänglich sein. Insofern kann mittels der Wohneinheit in Verbindung mit dem Abrollrahmen ein modulares Konzept bereitgestellt werden.

Längsträger der Wohneinheit können insbesondere aus seitlich außenliegende Träger ausgestaltet sein, welche Bodenkontakt sicherstellen und gleichzeitig eine größere Querschnittshöhe aufweisen als Querträger, so dass unter der Einheit zwischen den Längsträgern ein Freiraum bzw. eine Aufnahmekavität für die Abrollrahmenvorrichtung gebildet ist/wird.

Gemäß einem vorteilhaften Ausführungsbeispiel ist die Abrollrahmenvorrichtung reversibel (demontierbar) form- und/oder kraftschlüssig oder irreversibel stoffschlüssig mit wenigstens einem Träger einer Rahmenkonstruktion der mobilen Wohneinheit, Ausstellungs- oder Verkaufseinheit verbunden. Dabei kann die Abrollrahmenvorrichtung auch bei reversibler Montage für eine dauerhafte Verbindung und dauerhafte Anordnung an der (Wohn-)Einheit montiert sein.

Gemäß einem vorteilhaften Ausführungsbeispiel weist die mobile Wohneinheit eine Länge von bis zu 7,5m, eine Breite von bis zu 3,6m (insbesondere bis zu 2,5m, insbesondere bis 3,0m oder über 3,0m) und eine Höhe von bis zu 3,0m auf. Mit anderen Worten: Die (Wohn-)Einheit kann in der Große skalierbar sein, insbesondere auch gemäß Vorschriften zum Einhalten von Größenabmessungen im Straßenverkehr. Beispielsweise entsprechen die Außenabmessungen jenen eines so genannten 20-Fuss-High-Cube-Containers.

Dabei kann die Abrollrahmenvorrichtung beispielsweise an Querträgern der Rahmenkonstruktion oder Bodengruppe befestigt sein/werden. Die Abrollrahmenvorrichtung eignet sich insbesondere auch für eine räumliche Integration in eine Rahmenkonstruktion mit vergleichsweise hohen Längsträgerprofilen, wobei die Abrollrahmenvorrichtung bevorzugt zwischen den Längsträgern angeordnet wird und wahlweise ausschließlich über die Querträger mit der Wohneinheit verbunden ist. Als Verbindungsmittel eignen sich z.B. Schrauben oder dergleichen. Die Träger der Wohneinheit können dabei aus einem weitgehend beliebigen Material bestehen, sei es z.B. Metall, Holz, Kunststoff.

Als Befestigungs-Nerbindungsmittel zwischen Abrollrahmen und Fahrzeug und/oder wahlweise auch zwischen Abrollrahmen und (Wohn-)Einheit können auch so genannte Twist-Lock-Verbindungen zum Einsatz kommen. Dies liefert insbesondere auch in Hinblick auf längere Transport-Strecken eine vorteilhafte Verbindungstechnik.

Gemäß einem vorteilhaften Ausführungsbeispiel weist die (Wohn-)Einheit an zumindest einer Stirnseite, insbesondere an beiden Stirnseiten, Rollen auf, insbesondere an Längsträgern der (Wohn-)Einheit montierte Rollen, insbesondere in einer Anordnung mit einem Höhenfreiraum bzw. Höhenunterschied zum Boden im einstelligen Millimeter- oder Zentimeter-Bereich (z.B. 1 bis 2cm). In einer Anordnung an zumindest einer der stirnseitigen unteren Kanten der Wohneinheit kann einerseits eine stabile Anordnung (insbesondere quer weit außenliegend) bereitgestellt werden, andererseits kann auch eine besonders flache Bauhöhe sichergestellt werden. Die Abrollrahmenvorrichtung braucht dabei nicht notwendigerweise ebenfalls Rollen aufweisen; vielmehr können die üblicherweise an der Abrollrahmenvorrichtung vorgesehenen Rollen in die (Wohn-)Einheit bzw. deren Rahmenstruktur integriert sein. Der Höhenfreiraum der Rollen kann derart gewählt werden, dass die Rollen nur dann den Boden kontaktieren, wenn die Wohneinheit einseitig angehoben wird.

Die zuvor genannte Aufgabe wird auch gelöst durch ein Transportfahrzeug, insbesondere LKW oder Tieflader, mit einer zuvor beschriebenen Abrollrahmenvorrichtung, wobei die Abrollrahmenvorrichtung eingerichtet ist zur Aufnahme, Abstützung und Weiterleitung von Massen im Bereich von mindestens 3,5 bis 10 Tonnen [to], insbesondere 5 bis 8 Tonnen [to]. Dies liefert zuvor genannte Vorteile, insbesondere auch im Zusammenhang mit vergleichsweise schweren, massigen Einheiten.

Das Transportfahrzeug kann eine Positionierungs-Kinematik in Ausgestaltung als Hebe-Schwenk-Kinematik mit Einhak-Mechanismus aufweisen, wobei die erste Kupplung einen frei nach oben und/oder nach vorne abstehenden Bügel aufweist, der korrespondierend zum Einhak-Mechanismus angeordnet ist.

Die Erfindung betrifft auch die Verwendung eine Abrollrahmenvorrichtung, insbesondere einer zuvor beschriebenen Abrollrahmenvorrichtung, beim/zum Verlagern und/oder Positionieren einer mobilen Wohneinheit, wobei die Abrollrahmenvorrichtung als Kupplung zwischen der Einheit und einem Transportfahrzeug fungiert, insbesondere einem LKW oder Tieflader, insbesondere beim Positionieren der mobilen Wohneinheit auf einem Stellplatz oder auf dem Transportfahrzeug, wobei die Abrollrahmenvorrichtung bevorzugt derart unter der Einheit integriert wird, dass eine/die betretbare Bodenebene der Einheit sowohl mit als auch ohne darunter angeordneter Abrollrahmenvorrichtung eine gleich hohe Höhe aufweist, insbesondere eine Höhe kleiner gleich 20cm zum Untergrund. Dies liefert zuvor genannte Vorteile.

Die zuvor genannte Aufgabe wird auch gelöst durch Verwendung einer Abrollrahmenvorrichtung, insbesondere einer zuvor beschriebenen Abrollrahmenvorrichtung, zum Aussteifen und Abstützen einer Bodengruppe einer autonom mobilen oder verlagerbaren Wohneinheit oder einer mobilen Ausstellungs- oder Verkaufseinheit, insbesondere beim Verlagern und/oder Positionieren der mobilen (Wohn-)Einheit, wobei die Abrollrahmenvorrichtung reversibel (demontierbar) form- und/oder kraftschlüssig oder irreversibel stoffschlüssig mit wenigstens einem Träger einer Rahmenkonstruktion der mobilen Wohneinheit, Ausstellungs- oder Verkaufseinheit verbunden ist, wobei die Abrollrahmenvorrichtung derart in die Bodengruppe integriert wird, insbesondere zwischen zwei Längsträgern der Einheit/Bodengruppe, dass eine/die betretbare Bodenebene der Einheit sowohl mit als auch ohne darunter angeordneter Abrollrahmenvorrichtung eine gleich hohe Höhe aufweist, insbesondere eine Höhe kleiner gleich 20cm zum Untergrund. Dies liefert zuvor genannte Vorteile.

Die Erfindung betrifft auch die Verwendung einer Abrollrahmenvorrichtung, insbesondere einer zuvor beschriebenen Abrollrahmenvorrichtung, in dauerhaft montierter Anordnung unter einer autonom mobilen oder verlagerbaren Wohneinheit oder einer mobilen Ausstellungs- oder Verkaufseinheit, einerseits zum dynamischen Abstützen beim Positionieren der Einheit, und andererseits zum dauerhaft statischen Abstützen und Versteifen der Einheit bei statischer Anordnung der Einheit auf dem Untergrund/Boden, wobei die Abrollrahmenvorrichtung bevorzugt derart unter der Einheit angeordnet wird, insbesondere zwischen zwei Längsträgern der Einheit/Bodengruppe, dass eine/die betretbare Bodenebene der Einheit sowohl mit als auch ohne darunter angeordneter Abrollrahmenvorrichtung eine gleich hohe Höhe aufweist, insbesondere eine Höhe kleiner gleich 20cm zum Untergrund. Dies liefert zuvor genannte Vorteile.

Die zuvor genannte Aufgabe wird auch gelöst durch ein Verfahren zum Aufnehmen, Abstützen und Positionieren einer autonom mobilen oder verlagerbaren Wohneinheit oder einer mobilen Ausstellungs- oder Verkaufseinheit zum Zwecke des Verlagerns der Einheit, insbesondere zum Verlagern einer Wohneinheit mit Rahmenkonstruktion, wobei mittels einer Abrollrahmenvorrichtung über eine erste Kupplung eine Kraft von einem Transportfahrzeug in wenigstens einem Angriffspunkt auf die Einheit übertragen wird, insbesondere mittels einer Positionierungs-Kinematik (insbesondere Hebe-Schwenk-Kinematik), indem die Kraft von der ersten Kupplung durch die Abrollrahmenvorrichtung zu einer zweiten Kupplung oder Verbindungsschnittstelle in die Einheit weitergeleitet wird, wobei die Einheit dabei über die zweite Kupplung/Verbindungsschnittstelle gehalten wird, insbesondere an deren Unterseite, insbesondere an deren Rahmenkonstruktion, und wobei die Kraft dabei über eine struktursteife Tragstruktur, mittels welcher Struktursteifigkeit zwischen der ersten und zweiten Kupplung und dem wenigstens einen Abrollpunkt sowohl bei statischer Anordnung als auch beim Positionieren sichergestellt wird, derart zu wenigstens einem von der Abrollrahmenvorrichtung definierten Abrollpunkt weitergeleitet wird, dass die Abrollrahmenvorrichtung mit der Einheit wahlweise auf dem Boden/Untergrund oder auf dem Transportfahrzeug in Zwei-Punkt-Lagerung oder Drei-Punkt-Lagerung mit Zwischen-Abstützung an einer hinteren Kante des Transportfahrzeugs positioniert wird. Dies liefert zuvor genannte Vorteile, insbesondere im Zusammenhang mit der Verlagerung und Positionierung von Wohneinheiten in der in DE 10 2018 127 871 beschriebenen Ausgestaltung.

Vorteilhafterweise wird die (Wohn-)Einheit zunächst translatorisch nach hinten verlagert (kombinierte Hebe-Schwenk-Kinematik mit translatorischer Führung bzw. translatorischer Aktuation) und erst dann bis auf den Boden geschwenkt, wenn die Einheit zumindest annähernd bis zur halben Länge x1 nach hinten vom Transportfahrzeug geschoben wurde. Dies ermöglicht eine möglichst kleine, durch das Schwenken bedingte Neigung der Einheit.

Gemäß einer Ausführungsform wird die (Wohn-)Einheit beim Aufnehmen, Positionieren und/oder Abrollen zumindest teilweise oder zusätzlich auch auf Längsträgern der (Wohn-)Einheit geführt und abgestützt, insbesondere mittels an der Unterseite der Längsträger vorgesehenen Gleitführungen. Dies begünstigt nicht zuletzt auch eine sehr flache Konstruktion. Wahlweise ist dabei die Erstreckung der Abrollrahmenvorrichtung nach unten um einen minimal spürbaren Betrag größer als jene der Längsträger, d.h., die Abrollrahmenvorrichtung steht mit Führungen oder Schienen oder dergleichen z.B. um 1-5mm nach unten hervor. Dies ermöglicht, den Großteil der Last über die Abrollrahmenvorrichtung abzuleiten, und stabilisierend können auch die Längsträger der (Wohn-)Einheit die Führung und Abstützung übernehmen, zumindest ergänzend bei leichten KippBewegungen (z.B. seitliches Kippen aufgrund Verspannungen, Unebenheiten, starkem Seitenwind oder dergleichen).

Gemäß einer Ausführungsform wird der wenigstens eine Abrollpunkt durch eine oder mehrere Rollen definiert, die an der (Wohn-)Einheit fixiert und abgestützt bzw. gelagert sind. Dies liefert nicht zuletzt auch gute Stabilität, insbesondere bei in den Bodenbereich bzw. in eine Bodengruppe der Einheit integrierter Anordnung der Abrollrahmenvorrichtung.

### KURZE BESCHREIBUNG DER FIGUREN

In den nachfolgenden Zeichnungsfiguren wird die Erfindung noch näher beschrieben, wobei für Bezugszeichen, die nicht explizit in einer jeweiligen Zeichnungsfigur beschrieben werden, auf die anderen Zeichnungsfiguren verwiesen wird. Es zeigen:
- **Figur 1**: in einer Seitenansicht in schematischer Darstellung eine Abrollrahmenvorrichtung mit darauf angeordneter (Wohn-)Einheit gemäß einem Ausführungsbeispiel beim Positionieren mittels einer Hebe-Schwenk-Kinematik eines Transportfahrzeugs;
- **Figuren 2A, 2B**: in einer Front- und Seitenansicht eine Abrollrahmenvorrichtung mit darauf angeordneter (Wohn-)Einheit gemäß einem Ausführungsbeispiel;
- **Figuren 3A, 3B, 3C**: in einer Front-/Seitenansicht und in einer Draufsicht konstruktive Details einer Abrollrahmenvorrichtung gemäß einem Ausführungsbeispiel;
- **Figur 4, 5**: jeweils in einer Seitenansicht in schematischer Darstellung eine Kinematik zum Verlagern einer Abrollrahmenvorrichtung zusammen mit einer darauf angeordneten (Wohn-)Einheit, jeweils gemäß einem Ausführungsbeispiel;
- **Figur 6**: in einer Seitenansicht in schematischer Darstellung (Wohn-)Einheit mit Rollen und räumlich besonders vorteilhaft integrierter einer Abrollrahmenvorrichtung gemäß einem Ausführungsbeispiel.

### DETAILLIERTE BESCHREIBUNG DER FIGUREN

Eine mobile (Wohn-)Einheit 1 weist eine Unterseite 1a und eine heckseitige Kante 1b auf. Beispielsweise ist die Einheit 1 mittels einer Rahmenkonstruktion 1.1 struktursteif ausgestaltet, insbesondere auch indem über die gesamte Länge x1 vorgesehene (bevorzugt integral ausgestaltete) Längsträger mit möglichst großer, stabiler Querschnittshöhe vorgesehen sind.

Die im Folgenden beschriebene Abrollrahmenvorrichtung 10 weist eine Unterseite 10a, eine erste Kupplung 11 mit einem ersten Kupplungspunkt 12, insbesondere mit Einhak-Bügel, und eine zweite Kupplung 13, insbesondere mit Führungsschiene, und einen zweiten Kupplungspunkt 14, insbesondere in Ausgestaltung als Auflager auf. An einem Kugel- oder Rollenlager oder einer entsprechenden Achse 15 sind Rollen 2 vorgesehen. Eine struktursteife Tragstruktur 16 wird durch Längsträger 17, Querträger 18 und Vertikalträger bzw. Vertikalstreben 19 gebildet, wobei der jeweilige Träger bevorzugt ein Winkel-Profil aufweist bzw. als Winkel-Profil ausgestaltet ist. An einer Unterseite 17a des jeweiligen Längsträgers können Längsschienen 17.1 bzw. Gleitlager oder Gleitlagerbestandteile vorgesehen sein.

Ein Transportfahrzeug 20, insbesondere ein LKW oder Tieflader, weist eine Positionierungs-Kinematik 21 auf, insbesondere in Ausgestaltung als Hebe-Schwenk-Kinematik mit wenigstens einem Arm 22, der von einem Aktuator 23 betätigt wird, insbesondere auf hydraulische Weise. Mittels der Kinematik 21 kann die Einheit 1 über eine heckseitige Kante 20b verschoben und auf- bzw. abgeladen werden. Die Kinematik 21 interagiert dabei mit Rollen 2, die um eine Abrollachse y15 gelagert sind, und die wahlweise an der Wohneinheit 1 und/oder an der Abrollrahmenvorrichtung 10 vorgesehen sind. Die Rollen 2 kontaktieren den Boden jeweils in einem Abroll- bzw. Bewegungspunkt Pb. Dazu wird der Arm 22 in einen Kraftangriffspunkt F12 an die erste Kupplung 11 bzw. in den ersten Kupplungspunkt 12 verlagert und dort gekuppelt, so dass die vom Aktuator ausgeübte Kraft über den Arm auf die Abrollrahmenvorrichtung und indirekt in die Einheit 1 bzw. in den Boden weitergeleitet werden kann.

Folgende geometrische Größen lassen die Beschreibung klarer werden: An einer Stirnseite yz ist die jeweilige Einheit 1 zugänglich; die erste Kupplung 11 ist bevorzugt zentrisch stirnseitig angeordnet, insbesondere derart, dass über nur einen Kupplungspunkt die Kraft eingeleitet werden kann. Die Koordinatenachsen x, y und z definieren die Längs-, Quer- und Höhenrichtung, und die Längenangaben x1; x10 betreffen die Länge der jeweiligen (Wohn-)Einheit 1 bzw. die Länge der Abrollrahmenvorrichtung 10, und die Breitenangaben y1; y10 betreffen die Breite in Querrichtung, und die Höhenanhaben z1; z10 betreffen die Höhe der Einheit bzw. der Abrollrahmenvorrichtung. Für das Positionieren bzw. das Auf-/Abladen ist je nach Art der Kinematik und je nach Größe der Wohneinheit 1 eine lichte Höhe z0 erforderlich. Der Parameter Δz gibt einen Höhenfreiraum bzw. -unterschied zwischen einer jeweiligen Rollenunterseite und dem Boden in statischer Anordnung der (Wohn-)Einheit an, also einen Spalt ohne Bodenkontakt.

Die einzelnen Träger der Abrollrahmenvorrichtung können z.B. je nach Lastzustand und/oder Verwendungsart gemäß einschlägiger Normen, z.B. DIN oder ISO, dimensioniert und miteinander verbunden sein.

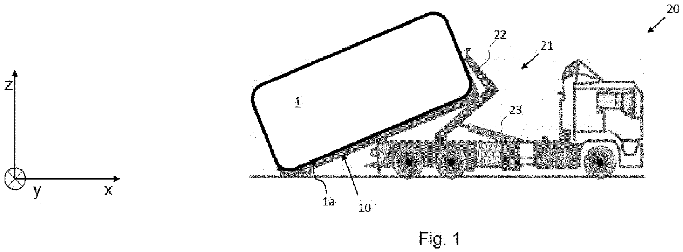

In Fig. 1 ist ein LKW 20 gezeigt, welcher eine (Wohn-)Einheit auf- oder ablädt. Die Wohneinheit 1 ist in einer Schwenkposition gezeigt, in welcher soeben (noch) der Boden kontaktiert wird. Die Hebe-Schwenk-Kinematik 21 positioniert die Einheit 1 auf dem Boden oder zieht die Einheit auf das Fahrzeug 20, wobei die heckseitige Kante der Einheit 1 über den Boden geschoben oder gerollt wird.

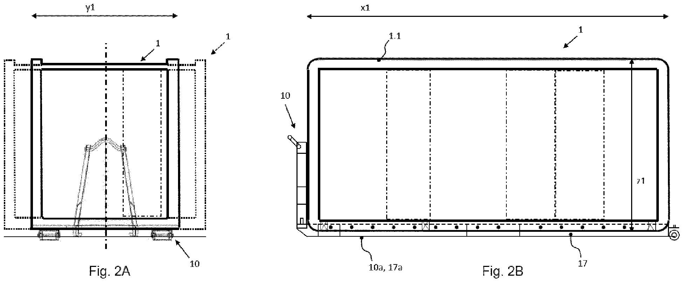

Fig. 2A, 2B beschreiben das grundsätzliche Konzept der vorliegenden Erfindung, nämlich die vorzugsweise dauerhafte/permanente Kombination von (Wohn-)Einheit 1 und Abrollrahmenvorrichtung 10 zu einer integralen Transporteinheit. Bei der in Fig. 2 gezeigten Variante ist die Vorrichtung 10 nicht vollständig in den Unterbau bzw. in die Bodengruppe der Einheit 1 integriert; zumindest für einige Anwendungsfälle ist die räumliche Integration des Rahmens 10 in die Einheit 1 insofern noch nicht optimiert; wahlweise kann dies jedoch erfolgen, insbesondere wenn eine möglichst niedrige Einstiegshöhe sichergestellt werden soll (Barrierefreiheit).

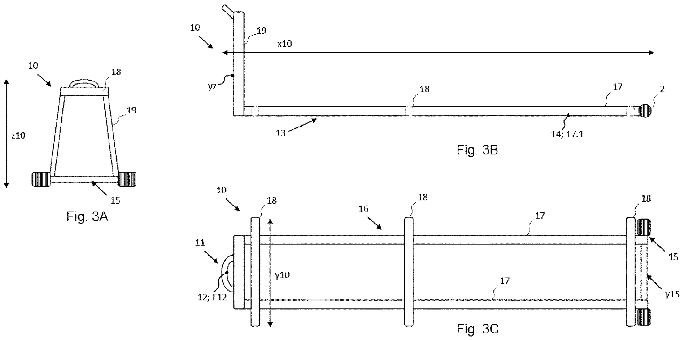

Fig. 3A, 3B, 3C beschreiben konstruktive Details. Die Anzahl und Position der einzelnen Träger, insbesondere auch der Querträger 18, kann individuell gewählt werden.

Die Abrollrahmenvorrichtung 10 weist beispielsweise die folgenden Abmessungen auf: Höhe z10 ca. 1.500mm, Länge über alles x10 ca. 4.000 bis 8.000mm, Breite y10 ca. 2.400 bis 3.400mm.

Die konstruktive Ausgestaltung der Träger kann sich für eine jeweilige Belastung insbesondere auch nach standardisierten Normen richten.

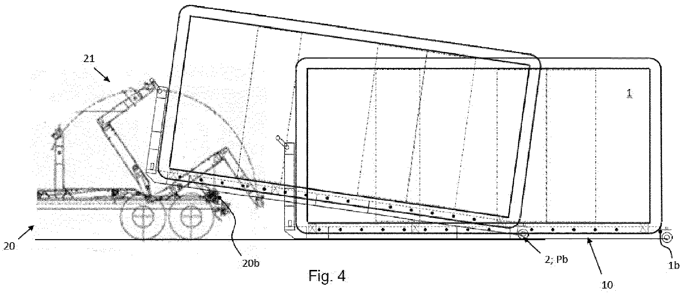

Fig. 4 zeigt zwei unterschiedliche Zeitpunkte beim Absetzen der Einheit 1 und illustriert dabei einen Bewegungspfad einer Hebe-Schwenk-Kinematik 21 ohne zusätzliche translatorische Verlagerung. Die Höhe der Ladefläche des Transportfahrzeugs ist vergleichsweise klein. Im aufgeladenen Zustand überlappt die Einheit 1 in Längsrichtung x nach hinten das Transportfahrzeug 20 bzw. steht deutlich nach hinten über.

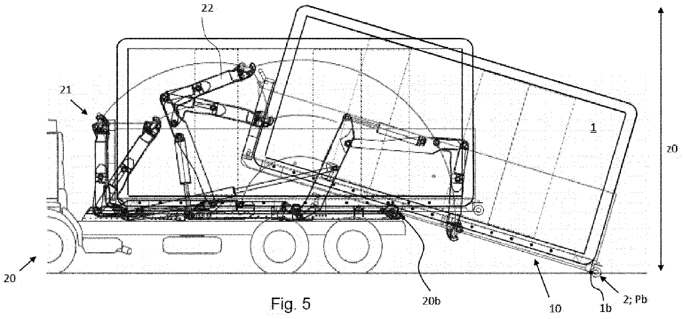

In Fig. 5 ist eine Anordnung gezeigt, bei welcher die Einheit 1 mit nur recht kurzem freiliegenden Abschnitt am Heck nach hinten übersteht, also nahezu vollständig auf die Ladefläche integriert werden kann. Fig. 5 illustriert einen Bewegungspfad einer Hebe-Schwenk-Kinematik 21 mit optional zusätzlicher translatorischer Verlagerung. Die zusätzliche translatorische Verlagerung des Arns 22 ermöglicht nicht zuletzt auch einen möglichst kleinen Schwenkwinkel. Vorteilhafterweise wird die Wohneinheit zunächst translatorisch nach hinten verlagert und erst dann bis auf den Boden geschwenkt, wenn die Wohneinheit zumindest annähernd bis zur halben Länge x1 nach hinten vom Transportfahrzeug geschoben wurde. Die Höhe der Ladefläche des Transportfahrzeugs ist vergleichsweise groß.

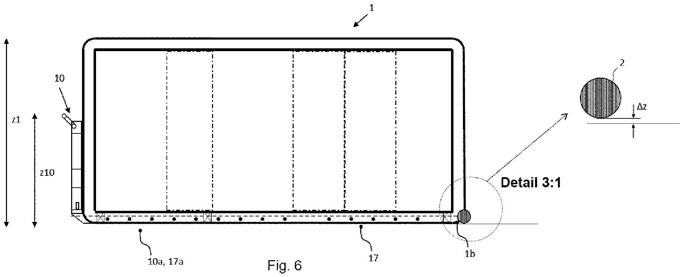

In Fig. 6 ist eine Anordnung gezeigt, bei welcher der unter der Einheit 1 angeordnete Abschnitt der Abrollrahmenvorrichtung 10 räumlich vollständig in die Bodengruppe bzw. Rahmenkonstruktion 1.1 der Einheit 1 integriert ist, hier in einer Anordnung zwischen Längsträgern der Rahmenkonstruktion 1.1. Die Rollen 2 können wahlweise direkt an der Rahmenkonstruktion 1.1 und/oder an der Abrollrahmenvorrichtung 10 vorgesehen sein.

### Bezugszeichenliste

- 1: mobile Wohneinheit
- 1a: Unterseite
- 1b: heckseitige Kante
- 1.1: Rahmenkonstruktion
- 2: Rolle (an Wohneinheit und/oder an Abrollrahmenvorrichtung)
- 10: Abrollrahmenvorrichtung
- 10a: Unterseite
- 11: erste Kupplung
- 12: erster Kupplungspunkt, insbesondere Einhak-Bügel
- 13: zweite Kupplung, insbesondere mit Führungsschiene
- 14: zweiter Kupplungspunkt, insbesondere Auflager
- 15: Kugel- oder Rollenlager oder Achse
- 16: struktursteife Tragstruktur
- 17: Längsträger, insbesondere Winkel-Profil
- 17a: Unterseite des Längsträgers
- 17.1: Längsschiene, Gleitlager oder Gleitlagerbestandteil
- 18: Querträger, insbesondere Winkel -Profil
- 19: Vertikalträger bzw. Vertikalstrebe, insbesondere Winkel-Profil
- 20: Transportfahrzeug, insbesondere LKW oder Tieflader
- 20b: heckseitige Kante
- 21: Positionierungs-Kinematik, insbesondere Hebe-Schwenk-Kinematik
- 22: Arm
- 23: Aktuator
- F12: Kraftangriffspunkt
- yz: Stirnseite
- Pb: Abrollpunkt(e) bzw. Bewegungspunkt(e)
- x; x1; x10: Längsrichtung; Länge der mobilen Wohneinheit; Länge der Abrollrahmenvorrichtung
- y; y1; y10: Querrichtung (Breite); Breite der mobilen Wohneinheit; Breite der Abrollrahmenvorrichtung
- y15: Abrollachse
- z; z1; z10: Höhenrichtung; Höhe der mobilen Wohneinheit; Höhe der Abrollrahmenvorrichtung
- z0: lichte Höhe
- Δz: Höhenfreiraum/-unterschied Rolle zu Boden in statischer Anordnung der (Wohn-)Einheit

## Patentansprüche

1. Abrollrahmenvorrichtung (10) eingerichtet zur Aufnahme, Abstützung und Positionierung einer mobilen Wohneinheit (1) oder einer mobilen Ausstellungs- oder Verkaufseinheit, wobei die Abrollrahmenvorrichtung (10) aufweist:
- eine erste Kupplung (11) mit wenigstens einem Angriffspunkt (F12) für eine Positionierungs-Kinematik (21) eines Transportfahrzeugs (20);
- eine zweite Kupplung (13) oder Verbindungsschnittstelle, die eingerichtet und angeordnet ist zum Kuppeln oder Verbinden und Halten der mobilen Wohneinheit (1);
- wenigstens einen durch die Abrollrahmenvorrichtung (10) definierten Abrollpunkt (Pb) eingerichtet zum Abstützen und Abrollen der Einheit (1) auf dem Untergrund;
- eine struktursteife Tragstruktur (16), mittels welcher Struktursteifigkeit für die unbeladene oder beladene Abrollrahmenvorrichtung (10) zumindest zwischen der ersten und zweiten Kupplung (11, 13) und dem wenigstens einen Abrollpunkt (Pb) sowohl bei statischer Anordnung als auch beim Positionieren sichergestellt ist;
**dadurch gekennzeichne**t, dass die Abrollrahmenvorrichtung (10) eingerichtet ist für eine struktursteife Abstützung der positionierten mobilen Wohneinheit (1) zwischen dem wenigstens einen Angriffspunkt (F12) an der ersten Kupplung (11) und dem wenigstens einen Abrollpunkt (Pb) wahlweise in Zwei-Punkt-Lagerung oder Drei-Punkt-Lagerung mit Zwischen-Abstützung an einer hinteren Kante (20b) des Transportfahrzeugs (20), , wobei die Abrollrahmenvorrichtung (10) in Ausgestaltung als Abrollrahmenvorrichtung zur räumlichen Integration unter eine Bodenebene einer/der mobilen Wohneinheit (1) bereitgestellt ist.

2. Abrollrahmenvorrichtung (10) nach Anspruch 1, wobei die struktursteife Tragstruktur (16) in dem unter der (Wohn-)Einheit (1) anzuordnenden Bereich Längs- und Querträger (17, 18) aufweist, die in derselben Höhen-Ebene angeordnet sind; und/oder wobei sich kreuzende Träger (17, 18) der struktursteifen Tragstruktur (16) in derselben Höhenebene angeordnet sind und/oder an Kreuzungspunkten auf Stoß stoffschlüssig miteinander verbunden sind.

3. Abrollrahmenvorrichtung (10) nach einem der vorhergehenden Ansprüche, wobei der Angriffspunkt (F12) stirnseitig der mobilen Wohneinheit (1) vorgesehen ist; und/oder wobei die Abrollrahmenvorrichtung (10) zur stirnseitigen Anordnung der ersten Kupplung (11) wenigstens einen Vertikalträger (19) und/oder wenigstens eine Vertikalstrebe aufweist.

4. Abrollrahmenvorrichtung (10) nach einem der vorhergehenden Ansprüche, wobei die zweite Kupplung oder Verbindungsschnittstelle (13) der Abrollrahmenvorrichtung (10) wenigstens eine Führungsschiene und/oder ein Gleitlager oder einen Gleitlagerbestandteil (17.1) aufweist, welche/s/r derart angeordnet und in Längsrichtung (x) ausgerichtet ist, dass die Abrollrahmenvorrichtung (10) eingerichtet ist zur optionalen translatorischen Führung der Einheit (1) relativ zum Transportfahrzeug (20), insbesondere bei reiner Translation ohne Schwenkbewegung.

5. Abrollrahmenvorrichtung (10) nach einem der vorhergehenden Ansprüche, wobei der Abrollpunkt (Pb) im Bereich einer/der heckseitigen Kante (1b) der mobilen Wohneinheit (1) anordenbar ist, insbesondere mit einer Längs-Varianz von maximal plus/minus 10-20cm zur heckseitigen Kante (1b); und/oder wobei die Abrollrahmenvorrichtung (10) Rollen (2) aufweist, welche ausschließlich an einer hinteren stirnseitigen Kante der Abrollrahmenvorrichtung (10) angeordnet sind, insbesondere in vordefinierter Längsposition (x), insbesondere mit vordefinierter Ausrichtung der Roll-Achse (15).

6. Abrollrahmenvorrichtung (10) nach einem der vorhergehenden Ansprüche, wobei die Abrollrahmenvorrichtung (10) auf Rollen (2) gelagert ist, welche einen Radius von kleiner 100mm, insbesondere kleiner gleich 60mm aufweisen.

7. Abrollrahmenvorrichtung (10) nach einem der vorhergehenden Ansprüche, wobei die Abrollrahmenvorrichtung (10) im Querschnitt flacher als 20cm ist, insbesondere flacher als 18cm, insbesondere zumindest in einem unterhalb der Wohneinheit (1) anzuordnenden Horizontalabschnitt der Abrollrahmenvorrichtung (10); und/oder wobei die Abrollrahmenvorrichtung (10) mit montierten Rollen (2) eine Höhe kleiner gleich 18cm aufweist; und/oder wobei die Abrollrahmenvorrichtung (10) in Ausgestaltung als Abrollrahmenvorrichtung zur räumlichen Integration unter eine Bodenebene einer/der mobilen Wohneinheit (1) bereitgestellt ist, nämlich zur räumlichen Integration zwischen zwei Längsträgern der Einheit oder Bodengruppe.

8. Mobile Wohneinheit (1) oder mobile Ausstellungs- oder Verkaufseinheit mit einer Abrollrahmenvorrichtung (10) nach einem der vorhergehenden Ansprüche, wobei die Abrollrahmenvorrichtung (10) an eine Boden-Struktur der mobilen Wohneinheit, Ausstellungs- oder Verkaufseinheit (1) gekuppelt ist.

9. Mobile Wohneinheit (1) oder mobile Ausstellungs- oder Verkaufseinheit nach dem vorhergehenden Anspruch, wobei die Einstiegshöhe zu einer Bodenebene der Einheit (1) kleiner gleich 20cm ist, insbesondere kleiner gleich 18cm.

10. Mobile Wohneinheit (1) oder mobile Ausstellungs- oder Verkaufseinheit nach einem der beiden vorhergehenden Ansprüche, wobei die Einheit (1) eine Bodenkonstruktionshöhe aufweist, die auch bei unter der Einheit (1) angeordneter Abrollrahmenvorrichtung (10) kleiner gleich 20cm ist.

11. Mobile Wohneinheit (1) oder mobile Ausstellungs- oder Verkaufseinheit nach einem der drei vorhergehenden Ansprüche, wobei die Abrollrahmenvorrichtung (10) räumlich in eine Bodengruppe der Einheit integriert ist, und wobei die Abrollrahmenvorrichtung (10) in dem unter der Einheit (1) angeordneten Abschnitt eine konstruktive Höhe kleiner gleich 15cmaufweist, und wobei eine/die betretbare Bodenebene der Einheit (1) sowohl mit als auch ohne darunter angeordneter Abrollrahmenvorrichtung (10) in einer Höhe kleiner gleich 20cm zum Untergrund anordenbar ist; und/oder wobei die (Wohn-)Einheit an zumindest einer Stirnseite Rollen (2) aufweist, insbesondere an Längsträgern der (Wohn-)Einheit montierte Rollen, insbesondere in einer Anordnung mit einem Höhenfreiraum (Δz) zum Boden im einstelligen Millimeter- oder Zentimeter-Bereich.

12. Transportfahrzeug (20), insbesondere LKW oder Tieflader, mit einer Abrollrahmenvorrichtung (10) nach einem der Ansprüche 1 bis 7, wobei die Abrollrahmenvorrichtung (10) eingerichtet ist zur Aufnahme, Abstützung und Weiterleitung von Massen im Bereich von mindestens 3,5 bis 10 Tonnen [to], insbesondere 5 bis 8 Tonnen [to].

13. Verfahren zum Aufnehmen, Abstützen und Positionieren einer autonom mobilen oder verlagerbaren Wohneinheit (1) oder einer mobilen Ausstellungs- oder Verkaufseinheit, zum Zwecke des Verlagerns der Einheit, wobei mittels einer Abrollrahmenvorrichtung (10), insbesondere mittels einer Abrollrahmenvorrichtung nach einem der Ansprüche 1 bis 7, über eine erste Kupplung (11) eine Kraft von einem Transportfahrzeug (20) in wenigstens einem Angriffspunkt (F12) auf die Einheit (1) übertragen wird, indem die Kraft von der ersten Kupplung (11) durch die Abrollrahmenvorrichtung (10) zu einer zweiten Kupplung (13) oder Verbindungsschnittstelle in die Einheit (1) weitergeleitet wird, wobei die Einheit dabei über die zweite Kupplung oder Verbindungsschnittstelle (13) gehalten wird, und wobei die Kraft dabei über eine struktursteife Tragstruktur (16), mittels welcher Struktursteifigkeit zwischen der ersten und zweiten Kupplung (11, 13) und dem wenigstens einen Abrollpunkt (Pb) sowohl bei statischer Anordnung als auch beim Positionieren sichergestellt wird, derart zu wenigstens einem von der Abrollrahmenvorrichtung (10) definierten Abrollpunkt (Pb) weitergeleitet wird, dass die Abrollrahmenvorrichtung (10) mit der Einheit (1) wahlweise auf dem Untergrund oder auf dem Transportfahrzeug (20) in Zwei-Punkt-Lagerung oder Drei-Punkt-Lagerung mit Zwischen-Abstützung an einer hinteren Kante (20b) des Transportfahrzeugs (20) positioniert wird, wobei die (Wohn-)Einheit (1) beim Aufnehmen, Positionieren und/oder Abrollen zumindest teilweise oder zusätzlich auch auf Längsträgern der (Wohn-)Einheit (1) geführt und abgestützt wird, oder wobei der wenigstens eine Abrollpunkt (Pb) durch eine oder mehrere Rollen (2) definiert wird, die an der (Wohn-)Einheit (1) fixiert und abgestützt sind.

14. Verfahren nach dem vorhergehenden Verfahrensanspruch, wobei die (Wohn-)Einheit (1) beim Aufnehmen, Positionieren und/oder Abrollen zumindest teilweise oder zusätzlich auch auf Längsträgern der (Wohn-)Einheit (1) geführt und abgestützt wird, nämlich mittels an der Unterseite der Längsträger vorgesehenen Gleitführungen.

15. Verwendung einer Abrollrahmenvorrichtung (10) nach einem der Ansprüche 1 bis 7 zum Aussteifen und Abstützen einer Bodengruppe einer autonom mobilen oder verlagerbaren Wohneinheit (1) oder einer mobilen Ausstellungs- oder Verkaufseinheit, insbesondere beim Verlagern und/oder Positionieren der (Wohn-)Einheit (1), wobei die Abrollrahmenvorrichtung (10) reversibel form- und/oder kraftschlüssig oder irreversibel stoffschlüssig mit wenigstens einem Träger (17, 18) einer Rahmenkonstruktion der mobilen Wohneinheit, Ausstellungs- oder Verkaufseinheit (1) verbunden ist, wobei die Abrollrahmenvorrichtung (10) derart in die Bodengruppe integriert wird, insbesondere zwischen zwei Längsträgern der Einheit oder Bodengruppe, dass eine/die betretbare Bodenebene der Einheit (1) sowohl mit als auch ohne darunter angeordneter Abrollrahmenvorrichtung (10) eine gleich hohe Höhe (z) aufweist, insbesondere eine Höhe kleiner gleich 20cm zum Untergrund.
